(19)

Europäisches Patentamt
European Patent Office
Office européen des brevets

(11)  EP 2 986 449 B1

(12)  **EUROPEAN PATENT SPECIFICATION**

(45) Date of publication and mention
of the grant of the patent:
**29.03.2017   Bulletin 2017/13**

(51) Int Cl.:
**B32B 7/06** (2006.01)      **B32B 27/32** (2006.01)

(21) Application number: **14724599.7**

(22) Date of filing: **10.04.2014**

(86) International application number:
**PCT/US2014/033618**

(87) International publication number:
**WO 2014/172178 (23.10.2014 Gazette 2014/43)**

(54) **FILMS CONTAINING EXTRUDABLE ADHESIVE FORMULATIONS**

FILME MIT EXTRUDIERBAREN KLEBSTOFFFORMULIERUNGEN

FILMS CONTENANT DES FORMULATIONS ADHÉSIVES EXTRUDABLES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **18.04.2013   US 201361813454 P**

(43) Date of publication of application:
**24.02.2016   Bulletin 2016/08**

(73) Proprietors:
• **Dow Global Technologies LLC
Midland, MI 48674 (US)**
• **Rohm and Haas Company
Philadelphia, PA 19106 (US)**

(72) Inventors:
• **BREED, Dana, R.
Gray, TN 37615 (US)**
• **HIMMELBERGER, Daniel, W.
Green Lane, PA 18054 (US)**
• **LAWRENCE, Cody, W.
Pearland, TX 77584 (US)**
• **WU, Xiaosong
Sugarland
TX 77479 (US)**

• **CHOPIN, Lamy, J., III
Missouri City, TX 77459 (US)**
• **GARNETT, John, W.
Omaha, NE 68124 (US)**

(74) Representative: **Boult Wade Tennant
Verulam Gardens
70 Gray's Inn Road
London WC1X 8BT (GB)**

(56) References cited:
WO-A1-2011/011729      FR-A1- 2 965 272
US-A1- 2011 262 747      US-A1- 2012 165 455
US-A1- 2012 207 408      US-B2- 7 622 176

• **C Li ET AL: "Adapted from the paper presented
at PSTC May 16-18, 2007 Orlando, FL
DEVELOPMENT OF OLEFIN BLOCK
COPOLYMERS FOR PRESSURE SENSITIVE
ADHESIVES", , 1 January 2007 (2007-01-01),
XP055129914, Retrieved from the Internet:
URL:http://www.eastman.com/literature_cent
er/misc/pstc_2007_li_pi_shan_carvagno_deve
lopment_of_obc_for_psa.pdf [retrieved on
2014-07-17]**

**Description**

BACKGROUND

There is a need for new multi-layered film structures that are formed from only coextrudable polymer formulations. There is a further need for such film structures which contain a resealable layer. Traditional resealable packages require an extra packaging step to introduce at least one extra structure, in addition to the film converting steps. These extra structures include, but are not limited to, zippers, interlocking mechanisms, or tapes or labels, and each structure is applied after formation of the film configuration.

In recent years, more advanced film structures containing an imbedded reseal layer have been made. To achieve these imbedded layers, typically one of the following technologies are used: 1) coatings or adhesives applied via a roll coating, 2) curtain coating, bead coating or extrusion coating of styrenic copolymers, or 3) most recently, difficult to coextrude styrenic copolymer-based films. In the case of the coatings or adhesives, the mechanism for reclose is generally based on a structural design incorporated into the package, such as a laser scored tab or a tape. The styrenic-based coextruded structure is difficult to process, because the reseal layer is based on a high melt index and/or tacky polymer. Also, bubble stability, odor and pellet blocking are all issues associated with these styrenic-based coextruded structures.

Films structures are disclosed in the following references: US7927679, US6737130, US7622176, US20110162993, US20080081183, US20070082161, US20050255196, US20070082161, US 20120165455; EP2143557A1, NZ525749A, WO2012154655, WO2011146616, and WO2012125945.

As discussed above, there is a need for flexible film structures that are formed from only coextrudable polymer formulations. There is a further need for such film structures that can be sealed using traditional means, but exhibit a controlled failure. There is also a need for films that can be used for packaging products, and which can be processed on typical film converting equipment, including, but not limited to a vertical form-fill-seal line.

SUMMARY OF INVENTION

The invention provides a film comprising at least two layers, Layer A and Layer B, and wherein Layer A is formed from a Composition A comprising the following:

an ethylene/$\alpha$-olefin block copolymer, and
a tackifier, and

wherein the Composition A has a melt index (I2) from 1 to 50 g/10 min, and an I10/I2 ratio from 7.5 to 13; and wherein Layer B is formed from a Composition B comprising one of the following:

i) a polar polymer,
ii) a polyolefin, or
iii) a combination thereof.

DETAILED DESCRIPTION

As discussed above, the invention provides a film comprising at least two layers, Layer A and Layer B, and wherein Layer A is formed from a Composition A comprising the following:

an ethylene/$\alpha$-olefin block copolymer, and
a tackifier, and

wherein the Composition A has a melt index (I2) from 1 to 50 g/10 min, and an I10/I2 ratio from 7.5 to 13; and wherein Layer B is formed from a Composition B comprising one of the following:

i) a polar polymer,
ii) a polyolefin, or
iii) a combination thereof.

An inventive film may comprise a combination of two or more embodiments as described herein.

Each film layer (e.g., Layer A or Layer B) of an inventive film may comprise a combination of two or more embodiments as described herein.

Each film layer composition (e.g., Composition A or Composition B) of an inventive film may comprise a combination of two or more embodiments as described herein.

In one embodiment, the film further comprises a third Layer C, formed from a Composition C, which comprises an ethylene-based polymer.

In one embodiment, the ethylene-based polymer of Composition C has a density less than, or equal to, 0.93 g/cc, and further less than, or equal to, 0.92 g/cc (1 cc = 1 cm$^3$).

In one embodiment, the ethylene-based polymer of Composition C has a density less than, or equal to, 0.930 g/cc, further less than, or equal to, 0.925 g/cc, further less than, or equal to, 0.930 g/cc.

In one embodiment, the ethylene-based polymer of Composition C has a density greater than, or equal to, 0.880 g/cc, further greater than, or equal to, 0.890 g/cc, further greater than, or equal to, 0.900 g/cc.

In one embodiment, the ethylene-based polymer of Composition C has a melting temperature (Tm) that is at least 10°C lower than the melting temperature (Tm) of the highest melting component of Composition B.

In one embodiment, the ethylene-based polymer of Composition C is selected from a low density polyethylene (LDPE), an ethylene/$\alpha$-olefin interpolymer and further a copolymer, or a combination thereof. In a further embodiment, the $\alpha$-olefin is selected from propylene, 1-butene, 1-hexene or 1-octene.

In one embodiment, the ethylene-based polymer is an ethylene/$\alpha$-olefin interpolymer, and further an ethylene/$\alpha$-olefin copolymer.

In one embodiment, ethylene-based polymer of Composition C is present in an amount greater than, or equal to, 90 weight percent, further greater than, or equal to, 95 weight percent, further greater than, or equal to, 98 weight percent, based on the weight of Composition C.

The ethylene-based polymer of Composition C may comprise a combination of two or more embodiments described herein.

In one embodiment, Composition B comprises i) a polar polymer. In a further embodiment, the polar polymer is selected from a polyamide, a polyvinyl alcohol, ethylene vinyl alcohol, ethylene vinyl acetate, ethylene methacrylate, ethylene acrylic acid, a polyester, a polylactic acid, or a combination thereof. In one embodiment, the polar polymer has a melt index from 0.5 to 50 g/10 min.

In one embodiment, Composition B comprises i) a polar polymer. In a further embodiment, the polar polymer is selected from a polyamide, a polyvinyl alcohol, a polyester, a polylactic acid, or a combination thereof. In one embodiment, the polar polymer has a melt

Index (I2) from 0.5 to 50 g/10 min, further from 0.5 to 20 g/10 min, further from 0.5 to 10 g/10 min.

In one embodiment, Composition B comprises ii) a polyolefin. In a further embodiment, the polyolefin is selected from a polyethylene homopolymer, an ethylene/$\alpha$-olefin copolymer, a polypropylene homopolymer, a propylene/ethylene copolymer, a propylene/$\alpha$-olefin copolymer, or a combination thereof. In one embodiment, the polyolefin has a melt index (I2) from 0.5 to 50 g/10 min, further from 0.5 to 20 g/10 min, further from 0.5 to 10 g/10 min; or a melt flow rate (MFR) from 0.5 to 50 g/10 min, further from 0.5 to 20 g/10 min, further from 0.5 to 10 g/10 min.

In one embodiment, Composition B comprises ii) a polyolefin. In a further embodiment, the polyolefin is selected from a polypropylene homopolymer, a propylene/ethylene copolymer, a propylene/$\alpha$-olefin copolymer, or a combination thereof. In one embodiment, the polyolefin has a melt flow rate (MFR) from 0.5 to 50 g/10 min, further from 0.5 to 20 g/10 min, further from 0.5 to 10 g/10 min.

In one embodiment, the polyolefin of Composition B is present in an amount greater than, or equal to 50 weight percent, further greater than, or equal to 55 weight percent, further greater than, or equal to 60 weight percent, based on the weight of Composition B.

In one embodiment, the polyolefin of Composition B is present in an amount greater than, or equal to 70 weight percent, further greater than, or equal to 80 weight percent, further greater than, or equal to 90 weight percent, based on the weight of Composition B.

In one embodiment, Layer A is adjacent to Layer B.

In one embodiment, Layer A is located between Layer B and Layer C.

In one embodiment, Layer A is adjacent to Layer C.

In one embodiment, Composition A has a melt index (I2) from 1.0 to 40 g/10 min, further from 1.0 to 30 g/10 min, further from 1 to 20 g/10 min.

In one embodiment, Composition A has a melt index (I2) from 2.0 to 50 g/10 min, further from 3.0 to 50 g/10 min, further from 4.0 to 50 g/10 min, further from 5.0 to 50 g/10 min.

In one embodiment, Composition A has a melt index (I2) from 1.0 to 30 g/10 min, further from 2.0 to 25 g/10 min, further from 3.0 to 20 g/10 min.

In one embodiment, Composition A has an I10/I2 from 7.6 to 13, further from 8 to 11.

In one embodiment, the composition has an I10/I2 ratio from 7.7 to 13, further from 8.0 to 12, further from 8.2 to 11.

In one embodiment, the ethylene/$\alpha$-olefin block copolymer of Composition A is present in an amount greater than, or equal to 50 weight percent, further greater than, or equal to 55 weight percent, further greater than, or equal to 60 weight percent, based on the weight of Composition A.

In one embodiment, the ethylene/α-olefin block copolymer of composition A is present in an amount from 50 to 95 weight percent, further from 60 to 90 weight percent, further from 65 to 85 weight percent, further from 70 to 85 weight percent, based on the weight of Composition A.

In one embodiment, the tackifier of Composition A is present in an amount from 5 to 30 weight percent, further from 7 to 25 weight percent, further from 8 to 23 weight percent, further from 9 to 20 weight percent, based on the weight of Composition A.

In one embodiment, Composition A further comprises an oil. In a further embodiment, the oil is a mineral oil.

In one embodiment, the oil is present in an amount from 2 to 25 weight percent, further from 4 to 20 weight percent, further from 6 to 15 weight percent, based on the weight of Composition A.

In one embodiment, Composition A has a density from 0.850 g/cc to 0.910 g/cc, further from 0.860 g/cc to 0.900 g/cc, further from 0.870 g/cc to 0.890 g/cc.

In one embodiment, the tackifier of Composition A has a softening temperature from 80°C to 140°C, further from 85°C to 135°C, further from 90°C to 130°C, further from 90°C to 125°C, as determined by Ring and Ball softening point (ASTM E 28).

In one embodiment, the tackifier of Composition A has a softening temperature from 80°C to 120°C, further from 85°C to 115°C, further from 90°C to 110°C, as determined by Ring and Ball softening point (ASTM E 28).

In one embodiment, the tackifier of Composition A is selected from the group consisting of the following: a non-hydrogenated aliphatic $C_5$ resin, a hydrogenated aliphatic $C_5$ resin, an aromatic modified $C_5$ resin, a terpene resin, a non-hydrogenated $C_9$ resin, a hydrogenated $C_9$ resin, or combinations thereof.

In one embodiment, the tackifier of Composition A is selected from the group consisting of the following: a non-hydrogenated aliphatic $C_5$ resin, a hydrogenated aliphatic $C_5$ resin, a non-hydrogenated $C_9$ resin, a hydrogenated $C_9$ resin, or combinations thereof.

In one embodiment, the amount of the ethylene/α-olefin block copolymer in Composition A, is greater than the amount of the tackifier in the Composition A.

In one embodiment, Composition A has a glass transition temperature (Tg) from - 70°C to -20°C, further from -65°C to -30°C, further from -62°C to -40°C, as determined by DSC.

In one embodiment, Composition A has a melting temperature (Tm) from 110°C to 130°C, further from 112°C to 125°C, further from 115°C to 122°C, as determined by DSC.

In one embodiment, Composition A has a crystallization temperature (Tc) from 100°C to 120°C, further from 102°C to 118°C, further from 104°C to 115°C, as determined by DSC.

In one embodiment, Composition A has a Delta H of crystallization from 15 J/g to 35 J/g, further from 16 J/g to 32 J/g, further from 17 J/g to 30 J/g, as determined by DSC.

In one embodiment, Composition A has a storage modulus (G' at 25°C) from $0.4 \times 10^7$ to $3.0 \times 10^7$ dyne/cm$^2$, further from $0.5 \times 10^7$ to $2.5 \times 10^7$ dyne/cm$^2$, further from $0.5 \times 10^7$ to $2.0 \times 10^7$ dyne/cm$^2$, as determined by DMS.

In one embodiment, the film further comprises a fourth Layer D, formed from a Composition D, which comprises an ethylene-based polymer.

In one embodiment, the ethylene-based polymer of Composition D has a density less than, or equal to, 0.95 g/cc, and further less than, or equal to, 0.94 g/cc. In a further embodiment, the ethylene-based polymer of Composition D has a density greater than, or equal to, 0.89 g/cc, further greater than, or equal to, 0.90 g/cc, further greater than, or equal to, 0.91 g/cc.

In one embodiment, the ethylene-based polymer of Composition D is selected from a low density polyethylene (LDPE), an ethylene/α-olefin copolymer, or a combination thereof. In a further embodiment, the α-olefin is selected from propylene, 1-butene, 1-hexene or 1-octene.

In one embodiment, ethylene-based polymer of Composition D is present in an amount greater than, or equal to, 35 weight percent, further greater than, or equal to, 40 weight percent, further greater than, or equal to, 45 weight percent, based on the weight of Composition D.

The ethylene-based polymer of Composition D may comprise a combination of two or more embodiments described herein.

The invention also provides an article comprising at least one component formed from an inventive film of any embodiment described herein.

In one embodiment, the article is selected from a blown film, a laminate, a cast film, or a pouch.

An inventive film may comprise a combination of two or more embodiments as described herein.

Composition A may comprise a combination of two or more embodiments as described herein.

The ethylene/α-olefin block copolymer of Composition A may comprise a combination of two or more embodiments as described herein.

The tackifier of Composition A may comprise a combination of two or more embodiments as described herein.

Composition B may comprise a combination of two or more embodiments as described herein.

The polar polymer of Composition B may comprise a combination of two or more embodiments as described herein.

The polyolefin of Composition B may comprise a combination of two or more embodiments as described herein.

Composition C may comprise a combination of two or more embodiments as described herein.

Composition D may comprise a combination of two or more embodiments as described herein.

An inventive article may comprise a combination of two or more embodiments as described herein.

*A. Ethylene/α-Olefin Block Copolymer*

As used herein, the terms "ethylene/α-olefin block copolymer," "olefin block copolymer," or "OBC," mean an ethylene/α-olefin multi-block copolymer, and includes ethylene and one or more copolymerizable α-olefin comonomer in polymerized form, characterized by multiple blocks or segments of two or more polymerized monomer units differing in chemical or physical properties. The terms "interpolymer" and "copolymer" are used interchangeably, herein, for the term ethylene/α-olefin block copolymer, and similar terms discussed in this paragraph. When referring to amounts of "ethylene" or "comonomer" in the copolymer, it is understood that this means polymerized units thereof. In some embodiments, the multi-block copolymer can be represented by the following formula:

$$(AB)_n$$

where n is at least 1, preferably an integer greater than 1, such as 2, 3, 4, 5, 10, 15, 20, 30, 40, 50, 60, 70, 80, 90, 100, or higher, "A" represents a hard block or segment and "B" represents a soft block or segment. Preferably, As and Bs are linked in a substantially linear fashion, as opposed to a substantially branched or substantially star-shaped fashion. In other embodiments, A blocks and B blocks are randomly distributed along the polymer chain. In other words, the block copolymers usually do not have a structure as follows.

AAA-AA-BBB-BB

In still other embodiments, the block copolymers do not usually have a third type of block, which comprises different comonomer(s). In yet other embodiments, each of block A and block B has monomers or comonomers substantially randomly distributed within the block. In other words, neither block A nor block B comprises two or more sub-segments (or sub-blocks) of distinct composition, such as a tip segment, which has a substantially different composition than the rest of the block.

Preferably, ethylene comprises the majority mole fraction of the whole block copolymer, i.e., ethylene comprises at least 50 mole percent of the whole polymer. More preferably ethylene comprises at least 60 mole percent, at least 70 mole percent, or at least 80 mole percent, with the substantial remainder of the whole polymer comprising at least one other comonomer that is preferably an α-olefin having 3 or more carbon atoms. In some embodiments, the olefin block copolymer may comprise 50 mol% to 90 mol% ethylene, preferably 60 mol% to 85 mol%, more preferably 65 mol% to 80 mol%. For many ethylene/octene block copolymers, the preferred composition comprises an ethylene content greater than 80 mole percent of the whole polymer and an octene content of from 10 to 15, preferably from 15 to 20 mole percent of the whole polymer.

The olefin block copolymer includes various amounts of "hard" and "soft" segments. "Hard" segments are blocks of polymerized units, in which ethylene is present in an amount greater than 95 weight percent, or greater than 98 weight percent, based on the weight of the polymer, up to 100 weight percent. In other words, the comonomer content (content of monomers other than ethylene) in the hard segments is less than 5 weight percent, or less than 2 weight percent based on the weight of the polymer, and can be as low as zero. In some embodiments, the hard segments include all, or substantially all, units derived from ethylene. "Soft" segments are blocks of polymerized units in which the comonomer content (content of monomers other than ethylene) is greater than 5 weight percent, or greater than 8 weight percent, greater than 10 weight percent, or greater than 15 weight percent based on the weight of the polymer. In some embodiments, the comonomer content in the soft segments can be greater than 20 weight percent, greater than 25 weight percent, greater than 30 weight percent, greater than 35 weight percent, greater than 40 weight percent, greater than 45 weight percent, greater than 50 weight percent, or greater than 60 weight percent, and can be up to 100 weight percent.

The soft segments can be present in an OBC from 1 weight percent to 99 weight percent of the total weight of the OBC, or from 5 weight percent to 95 weight percent, from 10 weight percent to 90 weight percent, from 15 weight percent to 85 weight percent, from 20 weight percent to 80 weight percent, from 25 weight percent to 75 weight percent, from 30 weight percent to 70 weight percent, from 35 weight percent to 65 weight percent, from 40 weight percent to 60 weight percent, or from 45 weight percent to 55 weight percent of the total weight of the OBC. Conversely, the hard segments can be present in similar ranges. The soft segment weight percentage and the hard segment weight percentage can be calculated based on data obtained from DSC or NMR. Such methods and calculations are disclosed in, for example, U.S. Patent No. 7,608,668, entitled "Ethylene/α-Olefin Block Interpolymers," filed on March 15, 2006, in the name of Colin L. P. Shan, Lonnie Hazlitt, et al., and assigned to Dow Global Technologies Inc. In particular, hard and soft segment weight percentages and comonomer content may be determined as described in Column 57 to Column 63 of US 7,608,668.

The olefin block copolymer is a polymer comprising two or more chemically distinct regions or segments (referred to as "blocks") preferably joined in a linear manner, that is, a polymer comprising chemically differentiated units, which are joined end-to-end with respect to polymerized ethylenic functionality, rather than in pendent or grafted fashion. In an embodiment, the blocks differ in the amount or type of incorporated comonomer, density, amount of crystallinity, crystallite size attributable to a polymer of such composition, type or degree of tacticity (isotactic or syndiotactic), regio-regularity or regio-irregularity, amount of branching (including long chain branching or hyper-branching), homogeneity or any other chemical or physical property. Compared to block interpolymers of the prior art, including interpolymers produced by sequential monomer addition, fluxional catalysts, or anionic polymerization techniques, the present OBC is characterized by unique distributions of both polymer polydispersity (PDI or Mw/Mn or MWD), block length distribution, and/or block number distribution, due, in an embodiment, to the effect of the shuttling agent(s) in combination with multiple catalysts used in their preparation.

In an embodiment, the OBC is produced in a continuous process and possesses a polydispersity index, PDI (or MWD), from 1.7 to 3.5, or from 1.8 to 3, or from 1.8 to 2.5, or from 1.8 to 2.2. When produced in a batch or semi-batch process, the OBC possesses PDI from 1.0 to 3.5, or from 1.3 to 3, or from 1.4 to 2.5, or from 1.4 to 2.

In addition, the olefin block copolymer possesses a PDI fitting a Schultz-Flory distribution rather than a Poisson distribution. The present OBC has both a polydisperse block distribution as well as a polydisperse distribution of block sizes. This results in the formation of polymer products having improved and distinguishable physical properties. The theoretical benefits of a polydisperse block distribution have been previously modeled and discussed in Potemkin, Physical Review E (1998) 57 (6), pp. 6902-6912, and Dobrynin, J. Chem.Phys. (1997) 107 (21), pp 9234-9238.

In an embodiment, the present olefin block copolymer possesses a most probable distribution of block lengths. In an embodiment, the olefin block copolymer is defined as having:

　　a) (A) Mw/Mn from 1.7 to 3.5, at least one melting point, Tm, in degrees Celsius, and a density, d, in grams/cubic centimeter, where in the numerical values of Tm and d correspond to the relationship:

$$Tm > -2002.9 + 4538.5(d) - 2422.2(d)^2,$$

　　and/or

　　b) (B) Mw/Mn from 1.7 to 3.5, and is characterized by a heat of fusion, ΔH in J/g, and a delta quantity, ΔT, in degrees Celsius, defined as the temperature difference between the tallest DSC peak and the tallest Crystallization Analysis Fractionation ("CRYSTAF") peak, wherein the numerical values of ΔT and ΔH have the following relationships:

$$\Delta T > -0.1299\, \Delta H + 62.81 \text{ for } \Delta H \text{ greater than zero and up to 130 J/g}$$

$$\Delta T \geq 48°C \text{ for } \Delta H \text{ greater than 130 J/g}$$

　　wherein the CRYSTAF peak is determined using at least 5 percent of the cumulative polymer, and if less than 5 percent of the polymer has an identifiable CRYSTAF peak, then the CRYSTAF temperature is 30°C; and/or

　　c) (C) elastic recovery, Re, in percent at 300 percent strain and 1 cycle measured with a compression-molded film of the ethylene/α-olefin interpolymer, and has a density, d, in grams/cubic centimeter, wherein the numerical values of Re and d satisfy the following relationship when ethylene/α-olefin interpolymer is substantially free of crosslinked phase:

$$Re > 1481 - 1629(d);$$

　　and/or

　　d) (D) has a molecular fraction which elutes between 40°C and 130°C when fractionated using TREF, characterized in that the fraction has a molar comonomer content greater than, or equal to, the quantity (- 0.2013) T + 20.07, more preferably greater than or equal to the quantity (-0.2013) T+ 21.07, where T is the numerical value of the peak elution temperature of the TREF fraction, measured in °C; and/or,

**e)** (E) has a storage modulus at 25°C, G' (25°C), and a storage modulus at 100°C, G'(100°C), wherein the ratio of G'(25°C) to G'(100°C) is in the range of 1:1 to 9:1.

The olefin block copolymer may also have:

**f)** (F) a molecular fraction which elutes between 40°C and 130°C when fractionated using TREF, characterized in that the fraction has a block index of at least 0.5 and up to 1, and a molecular weight distribution, Mw/Mn, greater than 1.3; and/or

**g)** (G) average block index greater than zero and up to 1.0 and a molecular weight distribution, Mw/Mn greater than 1.3. It is understood that the olefin block copolymer may have one, some, all, or any combination of properties (A)-(G). Block Index can be determined as described in detail in US Patent No. 7,608,668. Analytical methods for determining properties (A) through (G) are disclosed in, for example, US Patent No 7,608,668, Col. 31, line 26 through Col. 35, line 44.

Suitable monomers for use in preparing the present OBC include ethylene and one or more addition polymerizable monomers other than ethylene. Examples of suitable comonomers include straight-chain or branched $\alpha$-olefins of 3 to 30, preferably 3 to 20, carbon atoms, such as propylene, 1-butene, 1-pentene, 3-methyl-1-butene, 1-hexene, 4-methyl-1-pentene, 3-methyl-1-pentene, 1-octene, 1-decene, 1-dodecene, 1-tetradecene, 1-hexadecene, 1-octadecene and 1-eicosene; cycloolefins of 3 to 30, preferably 3 to 20, carbon atoms, such as cyclopentene, cycloheptene, norbornene, 5-methyl-2-norbornene, tetracyclododecene, and 2-methyl-1,4,5,8-dimethano-1,2,3,4,4a,5,8,8a-octahydronaphthalene; di-and polyolefins, such as butadiene, isoprene, 4-methyl-1,3-pentadiene, 1,3-pentadiene, 1,4-pentadiene, 1,5-hexadiene, 1,4-hexadiene, 1,3-hexadiene, 1,3-octadiene, 1,4-octadiene, 1,5-octadiene, 1,6-octadiene, 1,7-octadiene, ethylidenenorbornene, vinyl norbornene, dicyclopentadiene, 7-methyl-1,6-octadiene, 4-ethylidene-8-methyl-1,7-nonadiene, and 5,9-dimethyl-1,4,8-decatriene; and 3-phenylpropene, 4-phenylpropene, 1,2-difluoroethylene, tetrafluoroethylene, and 3,3,3-trifluoro-1-propene.

In one embodiment, the ethylene/$\alpha$-olefin block copolymer has a density of from 0.850 g/cc to 0.900 g/cc, or from 0.855 g/cc to 0.890 g/cc or from 0.860 g/cc to 0.880 g/cc. In one embodiment, the ethylene/$\alpha$-olefin block copolymer has a Shore A value of 40 to 70, preferably from 45 to 65 and more preferably from 50 to 65. In one embodiment, the ethylene/$\alpha$-olefin block copolymer has a melt index (MI) from 0.1 g/10 min to 50 g/10 min, or from 0.3 g/10 min to 30 g/10 min, or from 0.5 g/10 min to 20 g/10 min, as measured by ASTM D 1238 (190°C/2.16 kg). In one embodiment, the ethylene/$\alpha$-olefin block copolymer comprises polymerized ethylene and one $\alpha$-olefin as the only monomer types. In a further embodiment, the $\alpha$-olefin is selected from propylene, 1-butene, 1-hexene or 1-octene.

In one embodiment, the ethylene/$\alpha$-olefin block copolymer has a density of from 0.850 g/cc to 0.900 g/cc, or from 0.855 g/cc to 0.890 g/cc or from 0.860 g/cc to 0.880 g/cc. In an embodiment, the ethylene/$\alpha$-olefin block copolymer has a melt index (MI or I2) from 0.5 g/10 min to 50 g/10 min, or from 0.7 g/10 min to 40 g/10 min, or from 0.8 g/10 min to 30 g/10 min, or from 1.0 g/10 min to 20 g/10 min, as measured by ASTM D 1238 (190°C/2.16 kg). In one embodiment, the ethylene/$\alpha$-olefin block copolymer comprises polymerized ethylene and one $\alpha$-olefin as the only monomer types. In a further embodiment, the $\alpha$-olefin is selected from propylene, 1-butene, 1-hexene or 1-octene.

In an embodiment, the comonomer in the ethylene/$\alpha$-olefin block copolymer is selected from propylene, butene, hexene, and octene.

In an embodiment, the ethylene/$\alpha$-olefin block copolymer excludes styrene.

In an embodiment, the ethylene/$\alpha$-olefin block copolymer is an ethylene/octene block copolymer.

The ethylene/$\alpha$-olefin block copolymers can be produced via a chain shuttling process, such as described in US Patent No. 7,858,706. In particular, suitable chain shuttling agents and related information are listed in Col. 16, line 39, through Col. 19, line 44. Suitable catalysts are described in Col. 19, line 45, through Col. 46, line 19, and suitable co-catalysts in Col. 46, line 20, through Col. 51 line 28. The process is described throughout the document, but particularly in Col. Col 51, line 29, through Col. 54, line 56. The process is also described, for example, in the following: US Patent Nos. 7,608,668; US 7,893,166; and US 7,947,793.

In one embodiment, the ethylene/$\alpha$-olefin block copolymer has at least one of the following properties A through E:

(A) Mw/Mn from 1.7 to 3.5, at least one melting point, Tm, in degrees Celsius, and a density, d, in grams/cubic centimeter, where in the numerical values of Tm and d correspond to the relationship:

$$Tm > -2002.9 + 4538.5(d) - 2422.2(d)^2,$$

and/or

(B) Mw/Mn from 1.7 to 3.5, and is characterized by a heat of fusion, ΔH in J/g, and a delta quantity, ΔT, in degrees Celsius defined as the temperature difference between the tallest DSC peak and the tallest Crystallization Analysis Fractionation ("CRYSTAF") peak, wherein the numerical values of ΔT and ΔH have the following relationships:

$$\Delta T > -0.1299\ \Delta H + 62.81 \text{ for } \Delta H \text{ greater than zero and up to } 130 \text{ J/g}$$

$$\Delta T \geq 48°C \text{ for } \Delta H \text{ greater than } 130 \text{ J/g}$$

wherein the CRYSTAF peak is determined using at least 5 percent of the cumulative polymer, and if less than 5 percent of the polymer has an identifiable CRYSTAF peak, then the CRYSTAF temperature is 30°C; and/or

(C) elastic recovery, Re, in percent at 300 percent strain and 1 cycle measured with a compression-molded film of the ethylene/α-olefin interpolymer, and has a density, d, in grams/cubic centimeter, wherein the numerical values of Re and d satisfy the following relationship when ethylene/α-olefin interpolymer is substantially free of crosslinked phase:

$$Re > 1481 - 1629(d);$$

and/or

(D) has a molecular fraction which elutes between 40°C and 130°C when fractionated using TREF, characterized in that the fraction has a molar comonomer content greater than, or equal to, the quantity (- 0.2013) T + 20.07, more preferably greater than or equal to the quantity (-0.2013) T+ 21.07, where T is the numerical value of the peak elution temperature of the TREF fraction, measured in °C; and/or,

(E) has a storage modulus at 25°C, G'(25°C), and a storage modulus at 100°C, G'(100°C), wherein the ratio of G'(25°C) to G'(100°C) is in the range of 1:1 to 9:1.

The ethylene/α-olefin block copolymer may comprise a combination or two or more embodiments described herein.

*B. Tackifier*

The inventive composition comprises a tackifier. Typically, a tackifier is a resin that is used to reduce modulus and improve surface adhesion.

In one embodiment, the tackifier may be a non-hydrogenated aliphatic $C_5$ (five carbon atoms) resin, a hydrogenated aliphatic $C_5$ resin, an aromatic modified $C_5$ resin, a terpene resin, a hydrogenated $C_9$ resin, or combinations thereof.

In one embodiment, the tackifier has a density from 0.92 g/cc to 1.06 g/cc.

In one embodiment, the tackifier has a Ring and Ball softening temperature (measured in accordance with ASTM E 28) from 80°C to 140°C, or from 85°C to 130°C, or from 90°C to 120°C, or from 90°C to 100°C.

In one embodiment, the tackifier has a melt viscosity less than 1000 Pascal second (Pa•s) at 175°C. In a further embodiment, the tackifier has a melt viscosity greater than, or equal to, 1 Pascal second (Pa•s) at 175°C, further greater than, or equal to, 5 Pascal second (Pa•s) at 175°C.

In one embodiment, the tackifier has a melt viscosity less than 500 Pa•s at 175°C, or less than 200 Pa•s at 175°C, or less than 100 Pa•s at 175°C, or less than 50 Pa•s at 175°C. In a further embodiment, the tackifier has a melt viscosity from 1 Pa•s to less than 100 Pa•s, or to less than 50 Pa•s at 175°C.

The $C_5$ resin for a "C5 tackifier" may be obtained from $C_5$ feedstocks such as pentenes and piperylene. The terpene resin for a tackifier may be based on pinene and d-limonene feedstocks. Hydrogenated resin for a tackifier may be based on aromatic resins such as $C_9$ feedstocks, rosins, aliphatic or terpene feedstocks.

Nonlimiting examples of suitable tackifier include tackifiers sold under the tradename PICCOTAC, REGALITE, REGALREZ, and PICCOLYTE, such as PICCOTAC 1095, REGALITE R1090, REGALREZ 1094, available from The Eastman Chemical Company, and PICCOLYTE F-105 from PINOVA.

The tackifier may comprise a combination or two or more embodiments described herein.

*C. Oil*

An inventive composition may comprise an oil. In one embodiment, the oil contains greater than 95 mole % aliphatic carbons. In one embodiment, the glass transition temperature for the amorphous portion of the oil is typically below -70°C. The oil can be a mineral oil. Nonlimiting examples of suitable oil include mineral oil sold under the tradenames HYDROBRITE 550 (Sonneborn), PARALUX 6001 (Chevron), KAYDOL (Sonneborn), BRITOL 50T (Sonneborn), CLARION 200 (Citgo), and CLARION 500 (Citgo). The oil may comprise a combination or two or more embodiments described herein.

*D. Additive*

An inventive composition may comprise one or more additives. Additives include, but are not limited to, antioxidants, ultraviolet absorbers, antistatic agents, pigments, viscosity modifiers, anti-block agents, release agents, fillers, coefficient of friction (COF) modifiers, induction heating particles, odor modifiers/absorbents, and any combination thereof. In one embodiment, the inventive composition further comprises one or more additional polymers. Additional polymers include, but are not limited to, ethylene-based polymers and propylene-based polymers.

DEFINITIONS

Unless stated to the contrary, implicit from the context, or customary in the art, all parts and percents are based on weight, and all test methods are current as of the filing date of this disclosure.

The term "composition," as used herein, includes material(s) which comprise the composition, as well as reaction products and decomposition products formed from the materials of the composition.

The term "polymer," as used herein, refers to a polymeric compound prepared by polymerizing monomers, whether of the same or a different type. The generic term polymer thus embraces the term homopolymer (employed to refer to polymers prepared from only one type of monomer, with the understanding that trace amounts of impurities can be incorporated into the polymer structure and/or within the bulk polymer), and the term interpolymer as defined hereinafter.

The term "interpolymer," as used herein, refers to polymers prepared by the polymerization of at least two different types of monomers. The generic term interpolymer thus includes copolymers (employed to refer to polymers prepared from two different types of monomers), and polymers prepared from more than two different types of monomers. However, see exception for the term "copolymer" for the ethylene/α-olefin block copolymers discussed above.

The term, "ethylene-based polymer," as used herein, refers to a polymer that comprises a majority weight percent polymerized ethylene monomer (based on the total weight of the polymer), and optionally may comprise at least one polymerized comonomer.

The term, "ethylene/α-olefin interpolymer," as used herein, refers to an interpolymer that comprises, in polymerized form, a majority amount of ethylene monomer (based on the weight of the interpolymer), and at least one α-olefin that is randomly distributed within the interpolymer. Thus, this term does not include an ethylene/α-olefin block copolymer.

The term, "ethylene/α-olefin copolymer," as used herein, refers to a copolymer that comprises, in polymerized form, a majority amount of ethylene monomer (based on the weight of the copolymer), and an α-olefin, as the only two monomer types. The α-olefin is randomly distributed within the copolymer. Thus, this term does not include an ethylene/α-olefin block copolymer.

The term, "olefin-based polymer," as used herein, refers to a polymer that comprises, in polymerized form, a majority amount of olefin monomer, for example ethylene or propylene (based on the weight of the polymer), and optionally may comprise one or more comonomers.

The term "propylene-based polymer," as used herein, refers to a polymer that comprises, in polymerized form, a majority amount of propylene monomer (based on the total weight of the polymer) and optionally may comprise at least one polymerized comonomer.

The term "polar polymer," as used herein, refer to a polymer that comprises a monomer unit containing at least one heteroatom. The term "polar polymer" includes a polymer that is functionalized with a polar molecule after polymer formation.

The term "polyolefin," polymer, as used herein, refers to a polymer that does not comprise a monomer unit containing at least one heteroatom. The term "polyolefin" does not include a polymer that is functionalized with a polar molecule after polymer formation.

The term "comprising," and derivatives thereof, is not intended to exclude the presence of any additional component, step or procedure, whether or not the same is disclosed herein. In order to avoid any doubt, all compositions claimed herein through use of the term "comprising" may include any additional additive, adjuvant, or compound whether polymeric or otherwise, unless stated to the contrary. In contrast, the term, "consisting essentially of" excludes from the scope of any succeeding recitation any other component, step or procedure, excepting those that are not essential to operability. The term "consisting of" excludes any component, step or procedure not specifically delineated or listed.

TEST METHODS

*Reclose Packaging Adhesion Test*

The samples were fabricated using the LABTECH 5-Layer Blown Film Line. Samples were then adhesively laminated on a COMEXI Solventless Laminator to a "48ga biaxially oriented polyethylene terephthalate (PET; available from DuPont Teijin)" using MORFREE 403A (solventless adhesive, available from The Dow Chemical Company) and co-reactant C411 (solvent-less adhesive; available from the Dow Chemical Company), to form a final laminate film structure (sealant/PSA/core (3 layers)/solventless adhesive/PET). Here, the test samples were cut to "300 mm long by 25 mm wide" strips of laminated film, folded in half (sealant layer to sealant layer) and sealed 25 mm from the fold. Each laminate film structure was sealed with "sealant side to sealant side" using an ACCUSEAL 540 PLUS impulse heat sealer. The seal pressure was set to 0.42 MPa (60 psi), and the seal was initiated at temperature of 149°C (300°F). The pressure was held for 0.5 seconds, and then released when the jaws of the heat sealer cooled to 127°C (260°F). The sealed samples were cut to dimensions "25 mm x 150 mm" with the seal perpendicular to the long axis to form a test specimen. The final seal size or area to perform the opening and closing mechanism was "25 mm by 5 mm."

The adhesion test followed the general framework of PSTC - 101 test method A. This is a 180° angle peel, at 30.5 cm (12 inches)/minute, against some surface of interest. In this case, the film layer adjacent to the adhesive layer, where reclose functionality was designed to exist, was the surface of interest. Flexible film samples were fixed to a stainless steel panel using masking tape [PET / solventless adhesive/ core (3 layers) / PSA/ sealant / sealant/ PSA / core (3 layers) / solventless adhesive / PET/ fixed to panel with masking tape at one free end (sealant/ PSA / core (3 layers) / solventless adhesive / PET) of the test specimen; the adhesive on the masking tape is in contact with the sealant layer of the free end of the test specimen]. A second piece of masking tape was used to fix the folded end of the test specimen to the panel; here, the tape was placed approximately 10 mm from the fold [masking tape /PET / solventless adhesive/ core (3 layers) / PSA/ sealant / sealant/ PSA / core (3 layers) / solventless adhesive / PET/ fixed to panel with masking tape; the adhesive on the masking tape is in contact with the upper PET layer of the folded end of the test specimen.] The other free end of the test specimen was peeled at 180° from the fixed free end of the test specimen, causing a break at the PSA -core interface [Free end: PET/ solventless adhesive / core (3 layers) / - BREAK - PSA / sealant/ sealant/ PSA/ core (3 layers)/ solventless adhesive/ PET- panel], and giving a force value.

An INSTRON 5564, running BLUEHILL 3 software, was used to collect the peel data. All samples were equilibrated to standard conditions, 23°C and 50% RH. Testing was conducted in standard conditions as well. The peak force was recorded for five test samples of each laminated film, and averaged. After the first peel, the specimen was reclosed using the standard roller conditions given in the PSTC test method for sample lamination. The standard dwell time between rolling/sealing the specimen and testing/peeling the specimen was 20 minutes (23°C and 50% RH). The specimen was reclosed 10 times, and then sat for 24 hours dwell time (23°C and 50% RH), and then reclosed another 10 times with the standard 20 minute dwell (23°C and 50% RH), or until the force could no longer be measured. The adhesion results are shown in Table 6.

*Melt Index*

Melt index for an ethylene-based polymer, or formulation, was measured in accordance with ASTM D 1238, condition 190°C/2.16 kg for I2, and 190 °C/10 kg for I10. While melt flow rate (MFR) for a propylene-based polymer was measured in accordance with ASTM D1238, condition 230°C/2.16 kg.

*Density*

Samples (polymers and formulations) for density measurement were prepared according to ASTM D 1928. Measurements are made within one hour of sample pressing using ASTM D792, Method B.

*DMS* (Polymers and Formulations)

Dynamic Mechanical Spectroscopy (DMS) was measured on compression molded disks formed in a hot press at 180°C at 10 MPa pressure for 5 minutes, and then water cooled in the press at 90°C/min. Testing was conducted using an ARES controlled strain rheometer (TA instruments) equipped with dual cantilever fixtures for torsion testing.

A 1.5 mm plaque was pressed, and cut in a bar of dimensions 32 x 12 mm (test sample). The test sample was clamped at both ends between fixtures separated by 10 mm (grip separation ΔL), and subjected to successive temperature steps from -100°C to 200°C (5°C per step). At each temperature, the torsion modulus G' was measured at an angular frequency of 10 rad/s, the strain amplitude being maintained between 0.1 percent and 4 percent, to ensure that the torque was sufficient and that the measurement remained in the linear regime.

An initial static force of 10 g was maintained (auto-tension mode) to prevent slack in the sample when thermal expansion occurred. As a consequence, the grip separation ΔL increased with the temperature, particularly above the melting or softening point of the polymer sample. The test stopped at the maximum temperature or when the gap between the fixtures reached 65 mm.

*DSC*

Differential Scanning Calorimetry (DSC) is used to measure crystallinity in the ethylene (PE) based polymer samples and propylene (PP) based polymer samples. About five to eight milligrams of sample is weighed and placed in a DSC pan. The lid is crimped on the pan to ensure a closed atmosphere. The sample pan is placed in a DSC cell, and then heated, at a rate of approximately 10°C/min, to a temperature of 180°C for PE (230°C for PP). The sample is kept at this temperature for three minutes. Then the sample is cooled at a rate of 10°C/min to -60°C for PE (-40°C for PP), and kept isothermally at that temperature for three minutes. The sample is next heated at a rate of 10°C/min, until complete melting (second heat). For polymer samples (not formulations), the percent crystallinity is calculated by dividing the heat of fusion ($H_f$ or $\Delta H$ melting), determined from the second heat curve, by a theoretical heat of fusion of 292 J/g for PE (165 J/g, for PP), and multiplying this quantity by 100 (e.g., for PE, % cryst. = ($H_f$ / 292 J/g) x 100; and for PP, % cryst. = ($H_f$ / 165 J/g) x 100).

Unless otherwise stated, melting point(s) ($T_m$) of each polymer is determined from the second heat curve obtained from DSC, as described above (peak Tm). The glass transition temperature ($T_g$) is determined from the second heating curve. The crystallization temperature ($T_c$) is measured from the first cooling curve (peak Tc). The Delta H of crystallization was obtained from the first cooling curve and is calculated by integrating the area under the crystallization peak. The Delta H of melting was obtained from the second heat curve and is calculated by integrating the area under the melting peak.

The Gel Permeation Chromatographic system consists of either a Polymer Laboratories

Model PL-210 or a Polymer Laboratories Model PL-220 instrument. The column and carousel compartments are operated at 140°C. Three Polymer Laboratories 10-μm (micron) Mixed-B columns are used. The solvent is 1,2,4 trichlorobenzene. The samples are prepared at a concentration of 0.1 grams of polymer in 50 milliliters of solvent containing 200 ppm of butylated hydroxytoluene (BHT). Samples are prepared by agitating lightly for 2 hours at 160°C. The injection volume is 100 microliters and the flow rate is 1.0 ml/minute.

Calibration of the GPC column set is performed with 21 narrow molecular weight distribution polystyrene standards with molecular weights ranging from 580 to 8,400,000 g/mole, arranged in six "cocktail" mixtures, with at least a decade of separation between individual molecular weights. The standards are purchased from Polymer Laboratories (Shropshire, UK). The polystyrene standards are prepared at "0.025 grams in 50 milliliters of solvent" for molecular weights equal to, or greater than, 1,000,000 g/mole, and "0.05 grams in 50 milliliters of solvent" for molecular weights less than 1,000,000 g/mole. The polystyrene standards are dissolved at 80°C with gentle agitation for 30 minutes. The narrow standards mixtures are run first, and in order of decreasing highest molecular weight component, to minimize degradation. The polystyrene standard peak molecular weights are converted to polyethylene molecular weights using the following equation (as described in Williams and Ward, J. Polym. Sci., Polym. Let., 6, 621 (1968)): $M_{polyethylene} = 0.431(M_{polystyrene})$. Polyethylene equivalent molecular weight calculations are performed using VISCOTEK TriSEC software Version 3.0.

Some embodiments of the present disclosure will now be described in detail in the following Examples.

EXAMPLES

*Reagents*

INFUSE 9107 Olefin Block Copolymer - OBC - Density of 0.866 g/cm$^3$ and I2 of 1.0 g/10 min (190°C/2.16 kg). Available from The Dow Chemical Company.

INFUSE 9507 Olefin Block Copolymer - OBC - Density of 0.866 g/cm$^3$ and I2 of 5.0 g/10 min (190 °C/2.16 kg).

Available from The Dow Chemical Company.

PICCOTAC 1095 - C5 Tackifier - Ring and ball softening point of 94°C and $M_w$ of 1700, available from Eastman Chemical Company.

CHEVRON PARALUX 6001 - Mineral oil - Density of approximately 0.87 g/cm$^3$ and Paraffinic carbon of approximately 70%.

IRGANOX 1010 - Antioxidant - Pentaerythritol tetrakis(3-(3,5-di-tert-butyl-4-hydroxyphenyl)propionate).

DOW LDPE 5004I - Low Density Polyethylene - Density of 0.924 g/cm$^3$ and I2 of 4.2 g/10 min (190 °C/2.16 kg)

DOW LDPE 748I - Low Density Polyethylene - Density of 0.920 g/cm$^3$ and I2 of 7 g/10 min (190 °C/2.16 kg).

ULTRAMID C33 - polyamide - Density of 1.12 g/cm$^3$. Available from BASF.

PE19 = AGILITY 1001 Processing Accelerator - Low Density Polyethylene - Density of 0.920 g/cm$^3$ and 12 of 0.65 g/10 min (190 °C/2.16 kg).

DOWLEX 2038.68G Polyethylene Resin - Density of 0.935 g/cm$^3$ and I2 of 1 g/10 min (190 °C/2.16 kg).

AMPLIFY TY 1053H - MAH grafted PE- Density of 0.958 g/cm$^3$ and I2 of 2 g/10 min (190 °C/2.16 kg). Available from The Dow Chemical Company.

ELITE 5960G - High Density Polyethylene - Density of 0.960 g/cm$^3$ and I2 of 0.85 g/10 min (190 °C/2.16 kg). Available from The Dow Chemical Company.

BRASKEM PP 6D83K - Random Copolymer Polypropylene - MFR of 1.9 g/10 min (230°C/2.16 kg).

DOW DFDA-7059 NT 7 Linear Low Density Polyethylene Resin - Density of 0.918 g/cm$^3$ and 12 of 2 g/10 min (190 °C/2.16 kg).

EVAL H171B - Ethylene Vinyl alcohol - Density of 1.17 g/cm$^3$ and I2 of 1.7 g/10 min (190 °C/2.16 kg). Available from Kuraray.

AMPACET 10063 - Antiblock masterbatch. Available from Ampacet.

AMPACET 10090 - Slip masterbatch. Available from Ampacet.

*Sample Preparation - Composition A*

Several formulations were prepared using a twin screw extruder, and then tested for melt index and density (Table 1). The formulations shown in Table 1 were prepared by a single step twin screw extrusion process. The formulation components, in wt%, are listed in Table 1. The compounding operation was performed on a COPERION ZSK-25 25-mm corotating twin screw extruder. The extruder had a total length-to-diameter ratio (L/D) of 48. The extruder was equipped with a 24 kW motor and a maximum screw speed of 1200 rpm. The feed system for this extrusion line consisted of two loss-in-weight feeders. The polymer precursor was fed into the main feed throat of the extruder using a K-Tron KCLQX3 single-screw feeder. PICCOTAC tackifier was feed into the side arm at barrel 5. The PARALUX process oil was added through an injection port at barrel 4 using a Leistritz Gear Pump. The compound was pelletized using an underwater pelletization unit with a 2-hole die. The pellets were collected and dusted with 2000 ppm POLYWAX 2000 (available from Baker Hughes), and then dried under nitrogen purge for 24 hours. Screw speed was set at 300 RPM for all the samples. Temperature profile was set as follows: 100°C (zone 1), 120°C (zone 2), 140°C (zone 3), 140°C (zone 4), 110°C (zone 5), 100°C (zone 6), 110°C (zone 7).

Table 1: Formulations Blended using Twin Screw Extruder (Composition A)

| Ex. | INFUSE Grade | INFUSE | PICCOTAC 1095 | PARALUX 6001 | Density | I2 (g/10 min) | I10 (g/10 min) | I10/I2 |
|---|---|---|---|---|---|---|---|---|
| 1 | 9107 | 74.1% | 19.3% | 6.6% | 0.884 | 3.3 | 32.5 | 9.9 |
| 2 | 9107 | 81.4% | 11.7% | 6.9% | 0.877 | 2.3 | 20.6 | 8.8 |
| 3 | 9107 | 77.0% | 9.3% | 13.7% | 0.875 | 3.3 | 31.7 | 9.6 |
| 4 | 9507 | 74.1% | 19.3% | 6.6% | 0.884 | 13.7 | 128.4 | 9.4 |
| 5 | 9507 | 81.4% | 11.7% | 6.9% | 0.882 | 10.3 | 92.2 | 8.9 |
| 6 | 9507 | 77.0% | 9.3% | 13.7% | 0.877 | 14.8 | 137.1 | 9.3 |

Table 2: DSC and DMS data of Formulations Blended using Twin Screw Extruder

| Ex. | Tc (°C) | Delta H cryst (J/g) | Tg (°C) | Tm (°C) | Delta H melt (J/g) | G' @ 25°C (dyne/cm$^2$)* |
|---|---|---|---|---|---|---|
| 1 | 104.51 | 23.6 | -54.26 | 119.35 | 30.39 | 1.5 x 10$^7$ |
| 2 | 108.01 | 26.15 | -58.83 | 119.65 | 28.87 | 0.5 x 10$^7$ |

(continued)

| Ex. | Tc (°C) | Delta H cryst (J/g) | Tg (°C) | Tm (°C) | Delta H melt (J/g) | G' @ 25°C (dyne/cm$^2$)* |
|---|---|---|---|---|---|---|
| 3 | 106.75 | 29.54 | -60.25 | 119.21 | 24.21 | 0.5 x 10$^7$ |
| 4 | 110.15 | 23.45 | -55.49 | 121.14 | 22.49 | 1.3 x 10$^7$ |
| 5 | 111.28 | 26.48 | -57.81 | 121.82 | 25.53 | 1.5 x 10$^7$ |
| 6 | 111.05 | 25.16 | -59.44 | 121.2 | 24.80 | 1.4 x 10$^7$ |
| *From DMS data. | | | | | | |

The formulation of Example 4, shown in Tables 1 and 2, was used to make a five layer films, on a blown film line, to form an embedded PSA, within a flexible package, and to enable a good reclose feature. Blown extrusion samples were fabricated using a LABTECH 5-layer blown film line. The heat seal layer was positioned on the outside of the bubble, and the material was self-wound on uptake rollers. Film fabrication conditions are shown in Table 3. Film configurations, and the polymer formulation (wt% of each component) used to form each film layer, are listed in Tables 4 and 5. The formulation of Example 6 was also used to form one film structure.

Table 3: Film Fabrication Conditions

| Structure | 1 | 1B | 2 | 3 | 4 | 4B | 5 | 6 | 7 | 7B | 8 |
|---|---|---|---|---|---|---|---|---|---|---|---|
| Output (kg/hr) ((lbs/hr)) | 17 (38) | 17 (38) | 17 (38) | 17 (38) | 17 (38) | 17 (38) | 17 (38) | 17 (38) | 17 (38) | 17 (38) | 17 (38) |
| Gauge (μm) ((mil)) | 76 (3) | 76 (3) | 76 (3) | 76 (3) | 76 (3) | 76 (3) | 76 (3) | 76 (3) | 76 (3) | 76 (3) | 76 (3) |
| Layflat (cm) ((inch)) | 36 (14) | 36 (14) | 36 (14) | 36 (14) | 36 (14) | 36 (14) | 36 (14) | 36 (14) | 36 (14) | 36 (14) | 36 (14) |
| Line Speed (m/min) ((ft/min)) | 5.2 (17) | 5.2 (17) | 5.2 (17) | 5.2 (17) | 5.3 (17.3) | 5.0 (16.5) | 5.3 (17.3) | 8.1 (26.4) | 4.7 (15.5) | 4.9 (16.1) | 5.2 (17) |
| Blower Speed (rpm) | 1761 | 1761 | 1761 | 1761 | 1507 | 1768 | 1632 | 1864 | 1739 | 1738 | 1739 |
| BUR | 3 | 3 | 3 | 3 | 3 | 3 | 3 | 3 | 3 | 3 | 3 |
| **Screw Speed (rpm)** | | | | | | | | | | | |
| Extruder 1 | 194 | 197 | 191 | 198 | 199 | 197 | 196 | 199 | 212 | 208 | 190 |
| Extruder 2 | 54 | 55 | 53 | 52 | 71 | 70 | 70 | 71 | 79 | 77 | 70 |
| Extruder 3 | 98 | 95 | 94 | 90 | 96 | 97 | 108 | 106 | 89 | 88 | 95 |
| Extruder 4 | 97 | 95 | 96 | 98 | 136 | 137 | 123 | 123 | 147 | 148 | 93 |
| Extruder 5 | 43 | 44 | 40 | 40 | 44 | 42 | 45 | 44 | 41 | 39 | 41 |
| **Melt Temp (°C) ((F))** | | | | | | | | | | | |
| Extruder 1 | 207 (404) | 207 (405) | 207 (404) | 207 (405) | 207 (405) | 207 (404) | 207 (405) | 208 (406) | 207 (405) | 207 (404) | 207 (404) |
| Extruder 2 | 219 (426) | 218 (425) | 219 (426) | 219 (426) | 219 (426) | 219 (426) | 218 (425) | 219 (426) | 218 (425) | 219 (426) | 218 (425) |
| Extruder 3 | 232 (449) | 232 (449) | 232 (449) | 232 (449) | 217 (422) | 216 (421) | 216 (421) | 216 (421) | 216 (420) | 216 (420) | 216 (420) |
| Extruder 4 | 159 (318) | 158 (317) | 159 (319) | 159 (318) | 159 (318) | 159 (318) | 158 (317) | 159 (318) | 158 (317) | 159 (318) | 158 (317) |
| Extruder 5 | 212 (414) | 212 (413) | 212 (414) | 212 (414) | 212 (413) | 212 (414) | 212 (414) | 212 (414) | 212 (413) | 212 (413) | 212 (413) |

(continued)

| Structure | 1 | 1B | 2 | 3 | 4 | 4B | 5 | 6 | 7 | 7B | 8 |
|---|---|---|---|---|---|---|---|---|---|---|---|
| **Melt Pressure (MPa) ((psi))** | | | | | | | | | | | |
| Extruder 1 | 25.75 (3679) | 27.65 (3950) | 26.54 (3791) | 27.67 (3953) | 22.53 (3218) | 21.78 (3112) | 28.08 (4012) | 28.11 (4016) | 23.18 (3312) | 22.48 (3212) | 24.73 (3533) |
| Extruder 2 | 22.68 (3240) | 23.48 (3354) | 21.91 (3130) | 22.09 (3156) | 23.57 (3367) | 22.81 (3258) | 29.72 (4245) | 30.28 (4326) | 24.76 (3537) | 23.90 (3414) | 26.04 (3720) |
| Extruder 3 | 9.97 (1424) | 10.35 (1478) | 9.14 (1306) | 9.53 (1362) | 18.63 (2662) | 18.00 (2572) | 23.45 (3350) | 23.35 (3336) | 19.31 (2758) | 18.56 (2652) | 9.13 (1304) |
| Extruder 4 | 7.20 (1029) | 8.22 (1174) | 7.06 (1008) | 7.04 (1006) | 7.66 (1094) | 7.09 (1013) | 8.04 (1148) | 8.19 (1170) | 7.44 (1063) | 6.56 (937) | 7.06 (1008) |
| Extruder 5 | 4.37 (624) | 6.62 (946) | 3.63 (519) | 3.84 (548) | 6.41 (916) | 4.24 (606) | 6.87 (982) | 6.83 (975) | 6.07 (867) | 4.02 (574) | 3.53 (504) |

Table 4: Five Layer Blown Film Structures

| Structure | 1 | 1B | 2 | 3 | 4 | 4B |
|---|---|---|---|---|---|---|
| Gauge (μm) ((mil)) | 76 (3) | 76 (3) | 76 (3) | 76 (3) | 76 (3) | 76 (3) |
| Layer ratio (%) | 10/20/20/10/40 | 10/20/20/10/40 | 10/20/20/10/40 | 10/20/20/10/40 | 10/20/20/20/30 | 10/20/20/20/30 |
| Layer 1 (sealant) | 99.84% LDPE 5004I + 1% AMPACET 10063 + 0.6% AMPACET 10090 | 99.84% DFDA 7059 NT 7 + 1% AMPACET 10063 + 0.6% AMPACET 10090 | 99.84% LDPE 748I + 1% AMPACET 10063 +0.6% AMPACET 10090 | 99.84% LDPE 748I + 1% AMPACET 10063 + 0.6% AMPACET 10090 | 99.84% DFDA 7059 NT 7 + 1% AMPACET 10063 + 0.6% AMPACET 10090 | 99.84% LDPE 5004I + 1% AMPACET 10063 + 0.6% AMPACET 10090 |
| Layer 2 (PSA) | Ex. 4 | Ex. 4 | Ex. 4 | Ex. 6 | Ex. 4 | Ex. 4 |
| Layer 3 (core) | ULTRAMID C33 | ULTRAMID C33 | ULTRAMID C33 | ULTRAMID C33 | 100% ELITE 5960G | 100% ELITE 5960G |
| Layer 4 (core) | 45% PE19 + 45% DOWLEX 2038.68G + 10% AMPLIFY 1053H | 45% PE19 + 45% DOWLEX 2038.68G + 10% AMPLIFY 1053H | 45% PE19 + 45% DOWLEX 2038.68G + 10% AMPLIFY 1053H | 45% PE19 + 45% DOWLEX 2038.68G + 10% AMPLIFY 1053H | 100% ELITE 5960G | 100% ELITE 5960G |
| Layer 5 (core) | 49.5% PE19 +49.5% DOWLEX 2038.68G + 1% AMPACET 10063 | 49.5% PE19 +49.5% DOWLEX 2038.68G + 1% AMPACET 10063 | 49.5% PE19 + 49.5% DOWLEX 2038.68G + 1% AMPACET 10063 | 49.5% PE19 + 49.5% DOWLEX 2038.68G + 1% AMPACET 10063 | 99% ELITE 5960G + 1%AMPACET 10063 | 99% ELITE 5960G + 1% AMPACET 10063 |

EP 2 986 449 B1

Table 5: Five Layer Blown Film Structures

| Structure | 5 | 6 | 7 | 7B | 8 |
|---|---|---|---|---|---|
| Gauge (μm) ((mil)) | 76 (3) | 51 (2) | 76 (3) | 76 (3) | 76 (3) |
| Layer ratio (%) | 10/20/20/20/30 | 10/20/20/20/30 | 10/20/20/20/30 | 10/20/20/20/30 | 10/20/20/10/40 |
| Layer 1 (sealant) | 99.84% DFDA 7059 NT 7 + 1% AMPACET 10063 + 0.6% AMPACET 10090 | 99.84% DFDA 7059 NT 7 + 1% AMPACET 10063 + 0.6% AMPACET 10090 | 99.84% DFDA 7059 NT7+1% AMPACET 10063 + 0.6% AMPACET 10090 | 99.84% LDPE 5004 + 1 % AMPACET 10063 + 0.6% AMPACET 10090 | 99.84% LDPE 748I + 1% AMPACET 10063 + 0.6% AMPACET 10090 |
| Layer 2 (PSA) | Ex. 4 | Ex. 4 | Ex. 4 | Ex. 4 | Ex. 4 |
| Layer 3 (core) | 100% DOWLEX 2038.68G | 100% DOWLEX 2038.68G | 100% BRASKEM 6D83K | 100% DOW/BRASKEM 6D83K | EVAL H171A |
| Layer 4 (core) | 100% DOWLEX 2038.68G | 100% DOWLEX 2038.68G | 100% BRASKEM 6D83K | 100% BRASKEM 6D83K | 45% PE19 + 45% DOWLEX 2038.68G + 10% AMPLIFY 1053H |
| Layer 5(core) | 99% DOWLEX 2038.68G + 1% AMPACET 10063 | 99% DOWLEX 2038.68G + 1% AMPACET 10063 | 100% BRASKEM 6D83K | 100% BRASKEM 6D83K | 49.5% PE19 + 49.5% DOWLEX 2038.68G + 1% AMPACET 10063 |

The inventive films of Tables 4 and 5 were of good integrity. These multilayered films were flexible films, formed from only coextrudable polymer formulations. These films can be used for packaging products, and can be processed on typical film converting equipment.

Certain films were adhesively laminated to a "48ga biaxially oriented polyethylene terephthalate (available from DuPont Teijin)" using MORFREE 403A (solventless adhesive, available from The Dow Chemical Company) and co-reactant C411 (solvent-less adhesive; available from the Dow Chemical Company), to form a final laminate film structure (sealant/PSA/core (3 layers)/solventless adhesive/PET).

The reclose adhesion results on the laminated film structures are shown in Table 6 following the "*Reclose Packaging Adhesion Test.*" As seen in Table 6, the inventive films have excellent reclose adhesion. By positioning the extrudable PSAs as the second layer in the structure, between the heat sealant and the core (or backing) materials, such as nylon or polypropylene, a structure was formed that could be opened and closed multiple times. The remainder of the core structure can be a LLDPE/LDPE blend. As discussed above, the five layer film was laminated to PET to simulate a typical package structure. The peel values stabilized and remained consistent for up to 20 open close cycles, when using polypropylene as the core material.

Table 6: Flexible Package - Reclose Adhesion Data

| Film # | | | Structure 7 | | Structure 1 | |
|---|---|---|---|---|---|---|
| | | Core (or Backing) Layer | RCPP | | PA | |
| | | Sealant Layer | LLDPE 7059 (Sealant) | | LDPE 5004I (Sealant) | |
| | | | Average | StdDev (n = 5) | Average | StdDev (n = 5) |
| | | Initial Peel Force | 1.34 N/mm (33.9 N/inch) | 0.09 N/mm (2.4 N/inch) | 0.59 N/mm (15.1 N/inch) | 0.09 N/mm (2.3 N/inch) |
| 20 Min Dwell | | 1 | 0.05 (1.3) | 0.02 (0.5) | 0.02 (0.6) | 0.01 (0.3) |
| 20 Min Dwell | | 2 | 0.04 (1.0) | 0.02 (0.4) | 0.02 (0.5) | 0.02 (0.4) |
| 20 Min Dwell | | 3 | 0.03 (0.8) | 0.01 (0.3) | 0.02 (0.4) | 0.01 (0.3) |
| 20 Min Dwell | | 4 | 0.03 (0.7) | 0.01 (0.3) | 0.02 (0.4) | 0.01 (0.3) |
| 20 Min Dwell | | 5 | 0.02 (0.6) | 0.01 (0.3) | 0.02 (0.4) | 0.01 (0.2) |
| 20 Min Dwell | | 6 | 0.02 (0.6) | 0.01 (0.3) | 0.01 (0.3) | 0.01 (0.2) |
| 20 Min Dwell | | 7 | 0.02 (0.6) | 0.01 (0.2) | 0.01 (0.3) | 0.01 (0.3) |
| 20 Min Dwell | | 8 | 0.02 (0.6) | 0.01 (0.2) | 0.01 (0.3) | 0.01 (0.2) |
| 20 Min Dwell | | 9 | 0.02 (0.5) | 0.01 (0.3) | 0.01 (0.3) | 0.01 (0.2) |
| 20 Min Dwell | | 10 | 0.02 (0.5) | 0.01 (0.2) | 0.01 (0.2) | 0.004 (0.1) |
| **24 Hour Dwell** | | 11 | 0.03 (0.7) | 0.02 (0.4) | 0.01 (0.3) | 0.01 (0.2) |
| 20 Min Dwell | | 12 | 0.02 (0.5) | 0.01 (0.3) | 0.01 (0.2) | 0.004 (0.1) |
| 20 Min Dwell | | 13 | 0.02 (0.4) | 0.01 (0.2) | 0.01 (0.2) | 0.01 (0.2) |
| 20 Min Dwell | | 14 | 0.02 (0.4) | 0.01 (0.2) | 0.01 (0.2) | 0.004 (0.1) |
| 20 Min Dwell | | 15 | 0.02 (0.4) | 0.01 (0.2) | | |
| 20 Min Dwell | | 16 | 0.02 (0.4) | 0.01 (0.2) | | |
| 20 Min Dwell | | 17 | 0.02 (0.4) | 0.01 (0.2) | | |
| 20 Min Dwell | | 18 | 0.02 (0.4) | 0.01 (0.2) | | |
| 20 Min Dwell | | 19 | 0.02 (0.4) | 0.01 (0.2) | | |

(continued)

| Film # | | | Structure 7 | | Structure 1 | |
|---|---|---|---|---|---|---|
| | | Core (or Backing) Layer | RCPP | | PA | |
| | | Sealant Layer | LLDPE 7059 (Sealant) | | LDPE 5004I (Sealant) | |
| | | | Average | StdDev (n = 5) | Average | StdDev (n = 5) |
| | | Initial Peel Force | 1.34 N/mm (33.9 N/inch) | 0.09 N/mm (2.4 N/inch) | 0.59 N/mm (15.1 N/inch) | 0.09 N/mm (2.3 N/inch) |
| 20 Min Dwell | | 20 | 0.02 (0.4) | 0.01 (0.2) | | |

**Claims**

1. A film comprising at least two layers, Layer A and Layer B, and wherein Layer A is formed from a Composition A comprising the following:

   an ethylene/$\alpha$-olefin block copolymer; and
   a tackifier, and

   wherein the composition A has a melt index (I2) from 1 to 50 g/10 min, as measured by ASTM D1238, condition 190°C/2.16 kg, and an I10/I2 ratio from 7.5 to 13 ($I_2$ as measured by ASTM D1238, condition 190°C/2.16 kg and I10 as measured by ASTM D1238, condition 190°C/10 kg); and
   wherein Layer B is formed from a Composition B comprising one of the following:

   i) a polar polymer,
   ii) a polyolefin ,or
   iii) a combination thereof.

2. The film of claim 1, further comprises a third Layer C, formed from a Composition C, which comprises an ethylene-based polymer.

3. The film of claim 2, wherein the ethylene-based polymer has a density less than, or equal to, 0.93 g/cc, as measured by ASTM D792, method B.

4. The film of claim 2 or claim 3, wherein the ethylene-based polymer has a melting temperature (Tm) that is at least 10°C lower than the melting temperature (Tm) of the highest melting component of Composition B, as determined by DSC.

5. The film of any one of the previous claims, wherein Composition B comprises i) a polar polymer.

6. The film of claim 5, wherein the polar polymer is selected from a polyamide, a polyvinyl alcohol, ethylene vinyl alcohol, ethylene vinyl acetate, ethylene methacrylate, ethylene acylic acid, a polyester, a polylactic acid, or a combination thereof.

7. The film of claim 5 or claim 6, wherein the polar polymer has a melt index from 0.5 g/10 min to 50 g/10 min, as measured by ASTM D1238, condition 190°C/2.16 kg

8. The film of any one of claims 1-4, wherein Composition B comprises ii) a polyolefin.

9. The film of claim 8, wherein the polyolefin is selected from a polyethylene homopolymer, an ethylene/$\alpha$-olefin co-polymer, a polypropylene homopolymer, a propylene/ethylene copolymer, a propylene/$\alpha$-olefin copolymer, or a combination thereof.

**10.** The film of any one of the previous claims, wherein Layer A is adjacent to Layer B.

**11.** The film of any one of claims 2-10, wherein Layer A is located between Layer B and Layer C.

**12.** The film of claim 11, wherein Layer A is adjacent to Layer C.

**13.** An article comprising at least one component formed from the film of any one of the previous claims.

**14.** The article of claim 13, wherein the article is selected from a blown film, a laminate, a cast film, or a pouch.

**Patentansprüche**

**1.** Eine Folie, die mindestens zwei Schichten, Schicht A und Schicht B, beinhaltet, und wobei Schicht A aus einer Zusammensetzung A gebildet ist, die Folgendes beinhaltet:

> ein Ethylen/a-Olefin-Blockcopolymer; und
> einen Klebrigmacher, und

wobei die Zusammensetzung A einen Schmelzindex (I2) von 1 bis 50 g/10 min aufweist, wie gemessen durch ASTM D1238, Bedingung 190 °C/2,16 kg, und ein I10/I2-Verhältnis von 7,5 bis 13 ($I_2$ wie gemessen durch ASTM D1238, Bedingung 190 °C/2,16 kg und I10, wie gemessen durch ASTM D1238, Bedingung 190 °C/10kg); und
wobei Schicht B aus einer Zusammensetzung B gebildet ist, die eines der Folgenden beinhaltet:

> i) ein polares Polymer,
> ii) ein Polyolefin, oder
> iii) eine Kombination davon.

**2.** Folie gemäß Anspruch 1, die ferner eine dritte Schicht C, gebildet aus einer Zusammensetzung C beinhaltet, die ein Polymer auf Ethylenbasis beinhaltet.

**3.** Folie gemäß Anspruch 2, wobei das Polymer auf Ethylenbasis eine Dichte von weniger als oder gleich 0,93 g/cm³, wie gemessen durch ASTM D792, Verfahren B, aufweist.

**4.** Folie gemäß Anspruch 2 oder Anspruch 3, wobei das Polymer auf Ethylenbasis eine Schmelztemperatur (Tm) aufweist, die mindestens 10 °C niedriger als die Schmelztemperatur (Tm) der höchsten Schmelzkomponente von Zusammensetzung B, wie bestimmt durch DSC, ist.

**5.** Folie gemäß einem der vorhergehenden Ansprüche, wobei Zusammensetzung B i) ein polares Polymer beinhaltet.

**6.** Folie gemäß Anspruch 5, wobei das polare Polymer ausgewählt ist aus einem Polyamid, einem Polyvinylalkohol, Ethylenvinylalkohol, Ethylenvinylacetat, Ethylenmethacrylat, Ethylenacrylsäure, einem Polyester, einer Polymilchsäure oder einer Kombination davon.

**7.** Folie gemäß Anspruch 5 oder Anspruch 6, wobei das polare Polymer einen Schmelzindex von 0,5 g/10 min bis 50 g/10 min, wie gemessen durch ASTM D1238, Bedingung 190 °C/2,16 kg, aufweist.

**8.** Folie gemäß einem der Ansprüche 1-4, wobei Zusammensetzung B ii) ein Polyolefin beinhaltet.

**9.** Folie gemäß Anspruch 8, wobei das Polyolefin ausgewählt ist aus einem Polyethylenhomopolymer, einem Ethylen/a-Olefincopolymer, einem Polypropylenhomopolymer, einem Propylen/Ethylencopolymer, einem Propylen/α-Olefincopolymer oder einer Kombination davon.

**10.** Folie gemäß einem der vorhergehenden Ansprüche, wobei Schicht A an Schicht B angrenzt.

**11.** Folie gemäß einem der Ansprüche 2-10, wobei sich Schicht A zwischen Schicht B und Schicht C befindet.

**12.** Folie gemäß Anspruch 11, wobei Schicht A an Schicht C angrenzt.

13. Ein Artikel, der mindestens eine Komponente, gebildet aus der Folie gemäß einem der vorhergehenden Ansprüche, beinhaltet.

14. Artikel gemäß Anspruch 13, wobei der Artikel aus einer Blasfolie, einem Laminat, einer Gießfolie oder einem Beutel ausgewählt ist.


**Revendications**

1. Un film comprenant au moins deux couches, Couche A et Couche B, et
dans lequel la Couche A est formée à partir d'une Composition A comprenant ce qui suit :

   un copolymère bloc éthylène/$\alpha$-oléfine ; et
   un agent poisseux, et

   dans lequel la composition A a un indice de fluidité à l'état fondu (I2) allant de 1 à 50 g/10 min, tel que mesuré par l'ASTM D1238, condition 190 °C/2,16 kg, et un rapport I10/I2 allant de 7,5 à 13 ($I_2$ étant tel que mesuré par l'ASTM D1238, condition 190 °C/2,16 kg et I10 étant tel que mesuré par l'ASTM D1238, condition 190 °C/10 kg) ; et
   dans lequel la Couche B est formée à partir d'une Composition B comprenant un élément parmi ce qui suit :

   i) un polymère polaire,
   ii) une polyoléfine, ou
   iii) une combinaison de ceux-ci.

2. Le film de la revendication 1, comprenant en outre une troisième Couche C, formée à partir d'une composition C, laquelle comprend un polymère à base d'éthylène.

3. Le film de la revendication 2, dans lequel le polymère à base d'éthylène a une masse volumique inférieure ou égale à 0,93 g/cm$^3$, telle que mesurée par l'ASTM D792, méthode B.

4. Le film de la revendication 2 ou de la revendication 3, dans lequel le polymère à base d'éthylène a une température de fusion (Tm) qui est inférieure d'au moins 10 °C à la température de fusion (Tm) du composant de fusion la plus élevée de la Composition B, telle que déterminée par DSC.

5. Le film de n'importe laquelle des revendications précédentes, dans lequel la Composition B comprend i) un polymère polaire.

6. Le film de la revendication 5, dans lequel le polymère polaire est sélectionné parmi un polyamide, un alcool polyvinylique, un éthylène alcool de vinyle, un éthylène acétate de vinyle, un méthacrylate d'éthylène, un éthylène acide acrylique, un polyester, un acide polylactique, ou une combinaison de ceux-ci.

7. Le film de la revendication 5 ou de la revendication 6, dans lequel le polymère polaire a un indice de fluidité à l'état fondu allant de 0,5 g/10 min à 50 g/10 min, tel que mesuré par l'ASTM D1238, condition 190 °C/2,16 kg.

8. Le film de n'importe laquelle des revendications 1 à 4, dans lequel la Composition B comprend ii) une polyoléfine.

9. Le film de la revendication 8, dans lequel la polyoléfine est sélectionnée parmi un homopolymère de polyéthylène, un copolymère éthylène/$\alpha$-oléfine, un homopolymère de polypropylène, un copolymère propylène/éthylène, un copolymère propylène/$\alpha$-oléfine, ou une combinaison de ceux-ci.

10. Le film de n'importe laquelle des revendications précédentes, dans lequel la Couche A est adjacente à la Couche B.

11. Le film de n'importe laquelle des revendications 2 à 10, dans lequel la Couche A est située entre la Couche B et la Couche C.

12. Le film de la revendication 11, dans lequel la Couche A est adjacente à la Couche C.

13. Un article comprenant au moins un composant formé à partir du film de n'importe laquelle des revendications

**EP 2 986 449 B1**

précédentes.

**14.** L'article de la revendication 13, l'article étant sélectionné parmi un film soufflé, un stratifié, un film coulé, ou un sachet.

**22**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7927679 B
- US 6737130 B
- US 7622176 B
- US 20110162993 A
- US 20080081183 A
- US 20070082161 A
- US 20050255196 A
- US 20120165455 A
- EP 2143557 A1

- NZ 525749 A
- WO 2012154655 A
- WO 2011146616 A
- WO 2012125945 A
- US 7608668 B
- US 7858706 B
- US 7893166 B
- US 7947793 B

**Non-patent literature cited in the description**

- **POTEMKIN.** *Physical Review E,* 1998, vol. 57 (6), 6902-6912
- **DOBRYNIN, J.** *Chem.Phvs.,* 1997, vol. 107 (21), 9234-9238

- **WILLIAMS ; WARD.** J. Polym. Sci. *Polym. Let.,* 1968, vol. 6, 621